# EUROPEAN PATENT APPLICATION

(11) **EP 4 145 010 A1**
(43) Date of publication of application: **08.03.2023**
(21) Application number: 21797252.0
(22) Date of filing: 23.04.2021
(51) Int. Cl.: F16D 13/70, F16D 25/0638

(54) **IDENTIFICATION STRUCTURE OF COMPONENT OF CLUTCH PISTON MECHANISM AND IDENTIFICATION METHOD OF COMPONENT OF CLUTCH PISTON MECHANISM**

(30) Priority: 01.05.2020 JP 2020081550
(71) Applicant: NOK Corporation, Minato-ku Tokyo 105-8585 (JP)
(72) Inventor: FUJII, Takuya, Fukushima-shi, Fukushima 960-1193 (JP)
(74) Representative: Global IP Europe Patentanwaltskanzlei
(86) International application number: PCT/JP2021/016466
(87) International publication number: WO 2021/220962

(57) **Abstract**

Provided is an identification structure for components of a clutch piston mechanism capable of facilitating distinction of types of the components of the clutch piston mechanism. The identification structure (1) for components of the clutch piston mechanism according to an embodiment of the present invention includes an identifying part (30) that is provided to a piston seal (2) as a component of the clutch piston mechanism and is used for identifying the piston seal (2). The identifying part (30) has a pattern formed by differences in surface roughness.

## Description

### Technical Field

The present invention relates to an identification structure for components included in a clutch piston mechanism used in an automatic transmission (AT) or a continuously variable transmission (CVT) for a vehicle such as an automobile, and an identification method of the same.

### Background Art

Conventionally, a clutch piston mechanism is provided to an automatic transmission for a vehicle such as an automobile for the clutch operation. The clutch piston mechanism includes a plurality of components, and the components of the clutch piston mechanism include a bonded piston seal, a canceller seal, and return springs provided between the bonded piston seal and the canceller seal. The bonded piston seal includes a piston that is a disk-shaped member made of metal, and annular seal lips provided to an end on the inner peripheral side and an end on the outer peripheral side of the piston. The seal lip is formed of an elastic body and seals hydraulic oil and guides the reciprocating motion of the bonded piston seal. The canceller seal includes a cancel plate that is a disk-shaped member made of metal, and an annular seal lip provided to an end on the outer peripheral side of the cancel plate. The seal lip is formed of an elastic material, ensures sealing between the canceller seal and the bonded piston seal, and forms a canceller hydraulic chamber for canceling centrifugal force acting on the hydraulic oil (see Patent Literature 1, for example).

### Document List

### Patent Literature

Patent Literature 1: Japanese Patent Application Publication No. 2018-115689

### Summary of Invention

### Technical Problem

The bonded piston seal and the canceller seal have different shapes depending on the type of an automatic transmission, and along with the recent increase in the types of automatic transmissions, the types of bonded piston seals and canceller seals have been also increasing. The shapes of the bonded piston seal and the canceller seal, which are different depending on the type of the automatic transmission, include various shapes of fine portions such as portions to be cut, which makes it difficult to distinguish the types of the bonded piston seal and the canceller seal from each other by visually inspecting portions having different shapes. Hence, when assembling an automatic transmission, it has been necessary to distinguish the types of each bonded piston seal and each canceller seal by checking the dimensions of each bonded piston seal and each canceller seal using inspection jigs or the like. Therefore, there has been a need for a bonded piston seal and a canceller seal that can facilitate distinction between the type of the bonded piston seal and the type of the canceller seal.

The present invention has been made in light of the above problems, and an object thereof is to provide an identification structure for components of a clutch piston mechanism and an identification method for components of a clutch piston mechanism, which are capable of facilitating distinction of the types of components of the clutch piston mechanism.

### Solution to Problem

In order to achieve the above object, an identification structure for components of a clutch piston mechanism according to the present invention is characterized by including an identifying part that is provided to a component of the clutch piston mechanism and is used for identifying the component of the clutch piston mechanism, and the identifying part has a pattern formed by differences in surface roughness.

In the identification structure for components of the clutch piston mechanism according to one aspect of the present invention, the identifying part is provided to a portion to be cut of the component of the clutch piston mechanism.

In the identification structure for components of the clutch piston mechanism according to one aspect of the present invention, the identifying part is provided to a portion different from a portion to be cut of the component of the clutch piston mechanism.

In the identification structure for components of the clutch piston mechanism according to one aspect of the present invention, the identifying part represents a difference in form between a particular portion of the component of the clutch piston mechanism and a particular portion of a component of another clutch piston mechanism.

In the identification structure for components of the clutch piston mechanism according to one aspect of the present invention, the identifying part represents information about a manufacturing process in which the component of the clutch piston mechanism was manufactured.

In the identification structure for components of the clutch piston mechanism according to one aspect of the present invention, the component of the clutch piston mechanism is a bonded piston seal, the bonded piston seal includes: a piston that is a disk-shaped member made of metal; an inner peripheral-side seal lip that is a member formed of an elastic body provided to an end portion on an inner peripheral side of the piston; and an outer peripheral-side seal lip that is a member formed of an elastic body provided to an end portion on an outer peripheral side of the piston, and the identifying part is provided to the piston.

In the identification structure for components of the clutch piston mechanism according to one aspect of the present invention, the component of the clutch piston mechanism is a canceller seal, the canceller seal includes: a cancel plate that is a disk-shaped member made of metal; and an outer peripheral-side seal lip that is a member formed of an elastic body provided to an end portion on an outer peripheral side of the cancel plate, and the identifying part is provided to the cancel plate.

In order to achieve the above object, an identification method for components of a clutch piston mechanism according to the present invention is characterized by including identifying a component of the clutch piston mechanism having the identification structure based on the identification structure for components of the clutch piston mechanism according to any one of the above-described aspects.

In the identification method for components of the clutch piston mechanism according to one aspect of the present invention, further includes a step of identifying information about the component of the clutch piston mechanism having the identification structure based on the identifying part.

In the identification method for components of the clutch piston mechanism according to one aspect of the present invention, the component of the clutch piston mechanism having the identification structure is distinguished from a component of a clutch piston mechanism having no identification structure.

### Effects of Invention

According to the identification structure for components of the clutch piston mechanism and the identification method for components of the clutch piston mechanism according to the present invention, it is possible to easily distinguish the types of the components of the clutch piston mechanism.

### Brief Description of Drawings

[Fig. 1] A partial cross-sectional view of a clutch piston mechanism of a transmission having components of the clutch piston mechanism provided with an identification structure for the components of the clutch piston mechanism according to an embodiment of the present invention.
[Fig. 2] A cross-sectional view showing a part of a cross section along the axis of a bonded piston seal provided with the identification structure according to the embodiment of the present invention.
[Fig. 3] A view showing an identifying part of the identification structure provided to the bonded piston seal according to the embodiment of the present invention.
[Fig. 4] A view showing how a pattern of the identifying part is formed.
[Fig. 5] A view showing the form of the piston seal indicated by the identifying part.
[Fig. 6] A cross-sectional view showing a part of a cross section along the axis of a canceller seal provided with the identification structure according to the embodiment of the present invention.
[Fig. 7] A view showing the form of the canceller seal indicated by the identifying part.

### Description of Embodiments

Hereinafter, embodiments of the present invention will be described with reference to the drawings.

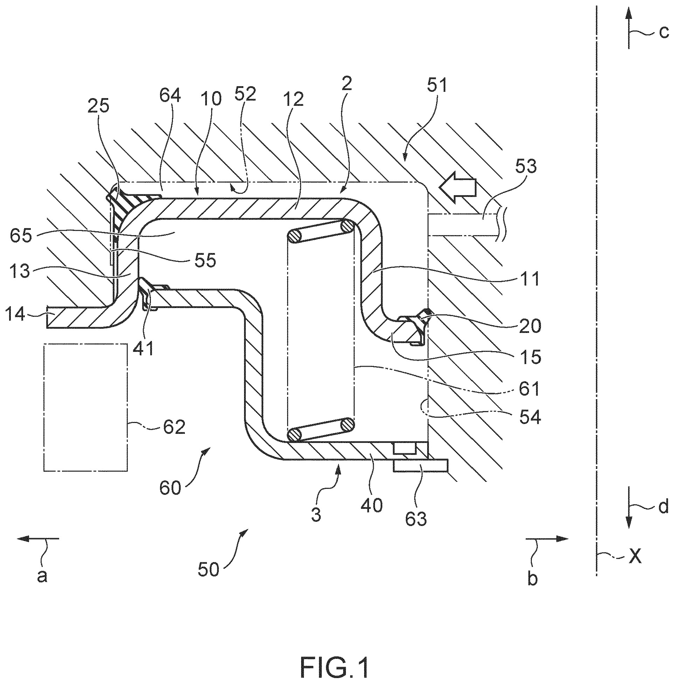

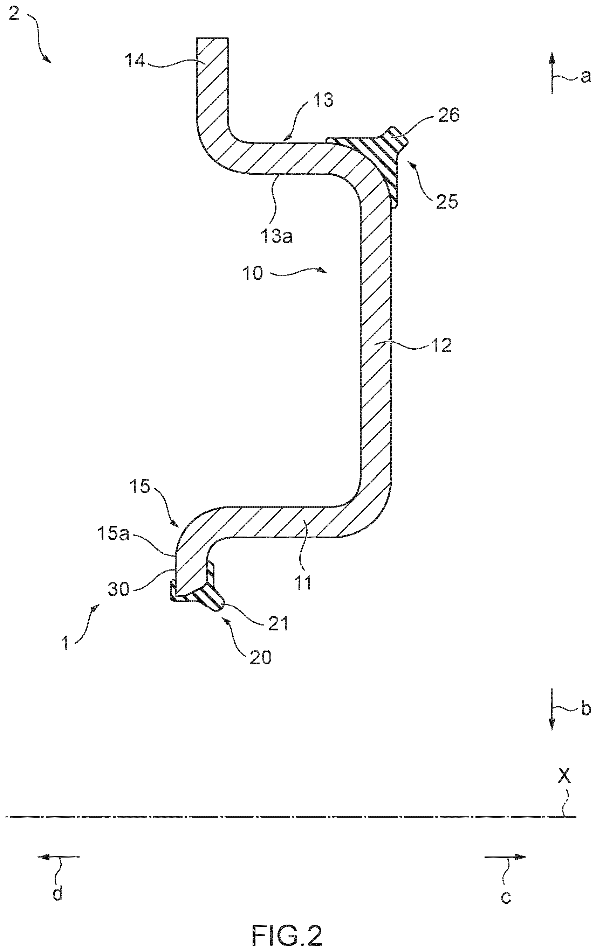

Fig. 1 is a partial cross-sectional view of a clutch piston mechanism 60 of an automatic transmission 50 including a bonded piston seal 2 as a component of the clutch piston mechanism provided with an identification structure 1 for components of the clutch piston mechanism according to the embodiment of the present invention. Fig. 2 is a cross-sectional view showing a part of the cross section along the axis x of the bonded piston seal 2. The identification structure 1 for components of the clutch piston mechanism (also simply referred to as the identification structure, hereinafter) according to the embodiment of the present invention is provided to the bonded piston seal 2 as a component of the clutch piston mechanism. As shown in Fig. 1, the bonded piston seal 2 (simply referred to as the piston seal 2, hereinafter) is used in the automatic transmission 50, and is equipped inside a housing 51 of the automatic transmission 50, to be included in the clutch piston mechanism 60. The clutch piston mechanism 60 includes a canceller seal 3, return springs 61, and a multiple disc clutch 62, in addition to the piston seal 2.

The piston seal 2 is an annular member that is annular about the axis x and is attached to the housing 51 so as not to be relatively rotatable about the axis x with the housing 51. The piston seal 2 forms a piston hydraulic chamber 64 that is an annular space between a recessed surface 52 of the housing 51 and the piston seal 2. The piston hydraulic chamber 64 is in communication with a port 53 formed in the housing 51, and the oil pressure in the piston hydraulic chamber 64 is controlled by a hydraulic oil supplied or discharged via the port 53, to thereby drive the piston seal 2 in the axis-x direction relative to the housing 51. This drive carries out connection and disconnection of the multiple disc clutch 62. The specific structure of the piston seal 2 will be described later.

The canceller seal 3 is an annular member, and is arranged opposite to the piston seal 2 in the housing 51, and is fixed to the housing 51 via a fixing member such as a snap ring 63 so as not to be moveable relative to the housing 51. When the housing 51 rotates at a high speed, a centrifugal force applied to the hydraulic oil in the piston hydraulic chamber 64 generates a force (centrifugal hydraulic pressure) in the hydraulic oil, the force pushing the piston seal 2 in the axis-x direction. The canceller seal 3 serves for canceling the centrifugal hydraulic pressure of the hydraulic oil in the piston hydraulic chamber 64.

The canceller seal 3 includes a cancel plate 40 that is a metal ring as a metal member around the axis, and an annular canceller lip 41 that is in contact with the whole outer peripheral-side portion of the piston seal 2. Examples of the metal material of the cancel plate 40 include, for example, stainless steel, such as SPCC (cold-rolled steel), SPFH (hot-rolled steel), and SAPH (hot-rolled steel). The canceller lip 41 is vulcanized and bonded to the outer peripheral end portion of the cancel plate 40, as shown in Fig. 1. The canceller lip 41 is in contact with a portion on the outer peripheral side of the piston seal 2 such that the piston seal 2 is slidable in the axis-x direction, and forms a canceller hydraulic chamber 65 that is an annular space between the piston seal 2 and the canceller seal 3.

The canceller hydraulic chamber 65 formed between the piston seal 2 and the canceller seal 3 encloses the hydraulic oil therein, and when the housing 51 rotates, the centrifugal force acts on the hydraulic oil in the canceller hydraulic chamber 65, and a force (centrifugal hydraulic pressure) that pushes the piston seal 2 toward the piston hydraulic chamber 64 side is generated in the hydraulic oil to which this centrifugal force is applied. The piston seal 2 is pushed toward the piston hydraulic chamber 64 side by the centrifugal hydraulic pressure of the hydraulic oil in the canceller hydraulic chamber 65, thereby canceling the pushing force to push the piston seal 2, caused by the centrifugal hydraulic pressure of the hydraulic oil in the piston hydraulic chamber 64.

Inside the canceller hydraulic chamber 65, the return springs 61 that urge the piston seal 2 and the canceller seal 3 in a direction away from each other are arranged at equal angular intervals in the circumferential direction. Each of the return springs 61 is, for example, a metal compression coil spring that pushes the piston seal 2 in a direction away from the canceller seal 3 against the hydraulic pressure of the hydraulic oil applied to the piston seal 2. The pushing force of the return springs 61 pushes the piston seal 2 toward the recessed surface 52 side of the housing 51 when the hydraulic pressure of the hydraulic oil in the piston hydraulic chamber 64 becomes a predetermined value or less, to thereby open the multiple disc clutch 62.

As mentioned above, the piston seal 2 and the canceller seal 3 are some components of the clutch piston mechanism 60 that operates the multiple disc clutch 62. In the clutch piston mechanism 60, even when the housing 51 rotates at a high speed, the centrifugal hydraulic pressure of the hydraulic oil in the piston hydraulic chamber 64 is canceled by the centrifugal hydraulic pressure of the hydraulic oil in the canceller hydraulic chamber 65. Hence, the movement of the piston seal 2 is controlled by the hydraulic pressure of the hydraulic oil in the piston hydraulic chamber 64 and the force of the return springs 61, and the piston seal 2 can be controlled as desired by controlling the hydraulic pressure of the hydraulic oil in the piston hydraulic chamber 64.

As described above, the piston seal 2 is set in various shapes and dimensions in accordance with the shape of the recessed surface 52 of the housing 51 in the clutch piston mechanism 60, the position of the multiple disc clutch 62, and the shapes of the piston hydraulic chamber 64 and the canceller seal 3, or the like, and the piston seal 2 has a shape in accordance with the type of the automatic transmission 50. Similarly, the canceller seal 3 is set in have various shapes and dimensions in accordance with the shape of the recessed surface 52 of the housing 51 in the clutch piston mechanism 60, the position of the multiple disc clutch 62, the shapes of the canceller hydraulic chamber 65 and the piston seal 2, or the like, and the canceller seal 3 has a shape in accordance with the type of the automatic transmission 50. In this manner, the piston seal and the canceller seal are set in have various forms in accordance with the type of the automatic transmission. Although differences between the piston seals having different forms might be visually distinguishable, it is difficult to visually distinguish differences between the piston seals when the piston seals have minor differences. Hence, in order to distinguish the differences, it is necessary to check the dimensions of the piston seal and the canceller seal using an inspection jig or the like. Therefore, in the manufacturing process of the clutch piston mechanism of the automatic transmission, in order to check whether or not the piston seal or the canceller seal conforms to this clutch piston mechanism, a process of dimension measurement using an inspection jig for the piston seal or the canceller seal is required. The identification structure 1 according to the embodiment of the present invention eliminates such a time-consuming process of distinguishing the piston seal or the canceller seal.

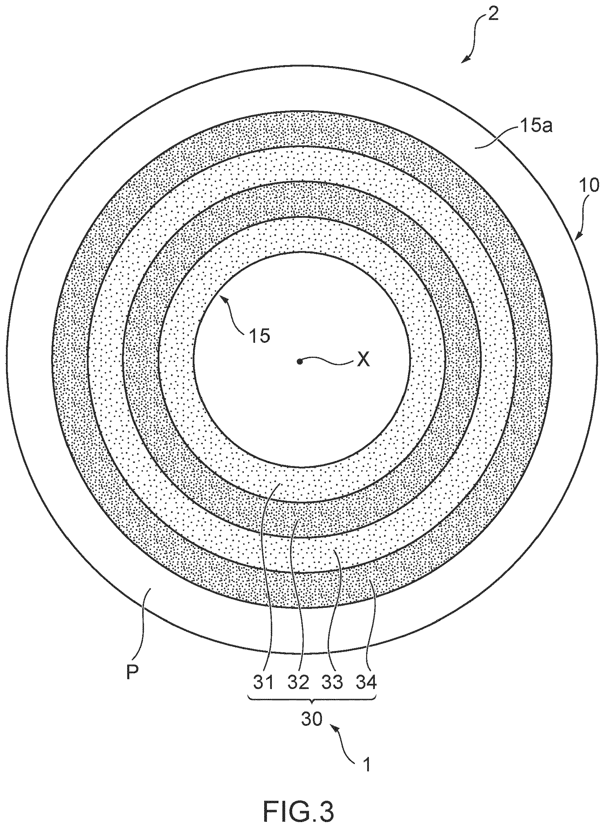

As shown in Fig. 2 and Fig. 3, the identification structure 1 according to the embodiment of the present invention includes the identifying part 30 that is provided to the piston seal 2 as a component of the clutch piston mechanism and used for identifying the piston seal 2, and the identifying part 30 has a pattern formed by differences in surface roughness. The identification structure 1 according to the embodiment of the present invention will be specifically described below. Note that Fig. 2 shows only one side of the cross section of the piston seal 2 (above the axis x).

The piston seal 2 includes: a piston 10 that is a disk-shaped member made of metal; an inner peripheral-side seal lip 20 that is a member formed of an elastic body provided at an end portion on the inner peripheral side of the piston 10; and an outer peripheral-side seal lip 25 that is a member formed of an elastic body provided at an end portion on the outer peripheral side of the piston 10. In addition, the piston 10 is formed with the identifying part 30 used for identifying the piston seal 2.

The piston 10 is an annular member around the axis x and has a shape as shown in Fig. 2, for example. Specifically, the piston 10 includes an inner peripheral-side cylindrical part 11, a disk part 12, an outer peripheral-side cylindrical part 13, an outer peripheral-side flange 14, and an inner peripheral-side flange 15. The inner peripheral-side cylindrical part 11 is a cylindrical or substantially cylindrical part arranged around the axis x as a central axis or substantially a central axis thereof; the disk part 12 is a disk-shaped or substantially disk-shaped part extending from an end portion on the piston hydraulic chamber 64 side (arrow c direction side) of the inner peripheral-side cylindrical part 11 toward the outer peripheral side (arrow a direction) and arranged around the axis x as a center or substantially a center thereof. The outer peripheral-side cylindrical part 13 is a cylindrical or substantially cylindrical part extending from an end portion on the outer peripheral side (arrow a direction) of the disk part 12 toward the multiple disc clutch side (arrow d direction) and arranged around the axis x as a central axis or substantially a central axis thereof. The outer peripheral-side flange 14 is a disc-shaped part extending from an end portion on the multiple disc clutch side (arrow d direction) of the outer peripheral-side cylindrical part 13 toward the outer peripheral side (arrow a direction) and arranged around the axis x as a center or substantially a center thereof. In addition, the inner peripheral-side flange 15 is a disk-shaped or substantially disk-shaped part extending from an end portion on the multiple disc clutch side (arrow d direction) of the inner peripheral-side cylindrical part 11 toward the inner peripheral side (arrow b direction side) and arranged around the axis x as a center or substantially a center thereof.

The outer peripheral-side flange 14 is a part of the aforementioned clutch piston mechanism 60 that contacts the multiple disc clutch 62, and adjusts the pushing force of the multiple disc clutch 62 in accordance with the movement of the piston seal 2 along the axis x so as to carry out engagement or disengagement of the multiple disc clutch 62. The piston 10 is manufactured, for example, by press-working or forging a metal material, and cutting a predetermined portion of the metal material. That is, the piston 10 is a member integrally formed from a metal material. Examples of the piston 10 include stainless steel, such as SPCC (cold rolled steel), SPFH (hot rolled steel), and SAPH (hot rolled steel).

The inner peripheral-side seal lip 20, which is an annular lip around the axis x and extending toward a side located on the piston hydraulic chamber 64 side is vulcanized and bonded to an end portion on the inner peripheral side of the inner peripheral-side flange 15 of the piston 10. The inner peripheral-side seal lip 20 is formed such that a contact end 21 as a tip end of the inner peripheral-side seal lip 20 is slidably in contact with an inner peripheral surface 54 of the housing 51 in the above clutch piston mechanism 60.

The outer peripheral-side seal lip 25 is vulcanized and bonded to a shoulder formed at a connection part between the disk part 12 and the outer peripheral-side cylindrical part 13 of the piston 10. The outer peripheral-side seal lip 25 is formed such that a contact end 26 as a tip end of the outer peripheral-side seal lip 25 is slidably in contact with an outer peripheral surface 55 of the housing 51 in the above clutch piston mechanism 60.

The inner peripheral-side seal lip 20 and the outer peripheral-side seal lip 25 are elastic bodies, and are formed of various rubber-like elastic members, for example. Examples of the rubber-like elastic members include synthetic rubbers, such as nitrile rubber (NBR), hydrogenated nitrile rubber (H-NBR), acrylic rubber (ACM), fluororubber (FKM), silicone rubber, and styrene-butadiene rubber (SBR).

The specific form of the piston seal 2 has been described above; however, the form of the piston seal 2 is not limited to the above-described specific form. That is, the shape, material, etc. of the piston 10 are not limited to the above-described specific shape, material, etc., and other shapes, materials, etc. may also be employed. Further, the forms of the inner peripheral-side seal lip 20 and the outer peripheral-side seal lip 25 are not limited to the specific forms described above. In other words, the shapes, materials, etc. of the inner peripheral-side seal lip 20 and the outer peripheral-side seal lip 25 are not limited to the above-described specific shapes, materials, etc., and other shapes, materials, etc. may also be employed.

The identification structure 1 according to the embodiment of the present invention includes the identifying part 30 provided to the piston 10 in the above manner. The identifying part 30 is formed to identify the piston seal 2, and has a pattern formed by differences in the surface roughness. In this respect, the piston seal 2 differs from the conventional piston seal.

The identifying part 30 is formed, for example, in a portion of the piston 10 required to be cut, and as shown in Fig. 1, Fig. 2, is formed in a canceller-side surface 15a of the inner peripheral-side flange 15 that is a surface facing the canceller seal 3 side. The canceller-side surface 15a of the inner peripheral-side flange 15 is a surface formed by cutting an intermediate I finished by subjecting the metal material to press-working, forging, or the like, as described above. The identifying part 30 is formed at the same time of cutting and forming the intermediate I with the canceller-side surface 15a.

For example, the identifying part 30 includes a pattern P having concentric circles as shown in Fig. 3. The pattern P has four circle regions 31, 32, 33, 34, and the pattern P is formed to be visible by making the metal surfaces in the circle regions different in surface roughness between the adjacent circle regions. For example, a portion of the circle region 31 on the inner peripheral side and a portion of the circle region 33 adjacent to the circle region 31 with the circle region 32 next to the circle region 31 interposed therebetween have the same surface roughness, and a portion of the circle region 32 and a portion of the circle region 34 have the same surface roughness and thereby the pattern P is formed to be visible. Note that the surface roughness of the circle regions 31, 33 is different from the surface roughness of the circle regions 32, 34. For example, the surface roughness of the circle regions 32, 34 is coarser than the surface roughness of the circle regions 31, 33.

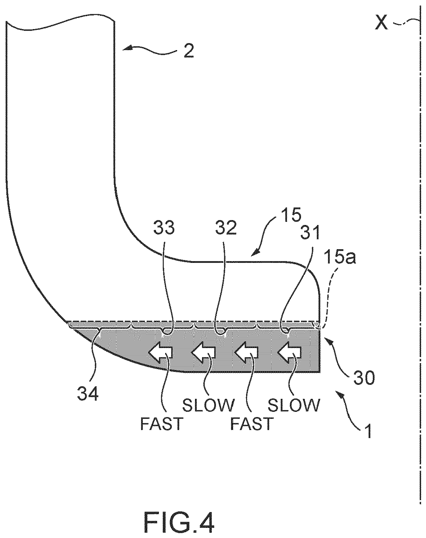

The pattern P of the identifying part 30 may be formed during the cutting of the identifying part 30 described above. That is, during the cutting and forming the intermediate I with the canceller-side surface 15a, the cutting is performed such that the roughness of the surface varies along a direction perpendicular to the axis x (radial direction), to thereby form the pattern P. For example, the pattern P is formed by changing the speed (feeding speed) of radially moving a blade for the cutting during the cutting of the identifying part 30. Specifically, as shown in Fig. 4, from the inner peripheral side of a portion corresponding to the canceller-side surface 15a of the inner peripheral-side flange 15 of the intermediate I toward the outer peripheral side of this portion, the feeding speed of the blade is repeatedly changed in the order of a slow feeding speed and a fast feeding speed, thereby forming the formed canceller-side surface 15a with the pattern P having a circle region with a smaller roughness and a circle region with a greater roughness in the order from the inner peripheral side of this canceller-side surface 15a.

In this manner, the identifying part 30 is formed to a portion to be cut corresponding to a portion of the intermediate I to be cut, to thereby form the identifying part 30 at the same time of cutting the portion to be cut. This allows an efficient manufacturing of the piston 10 having the identifying part 30. Note that the pattern of the identifying part 30 is not limited to the pattern P shown in the drawing, and various patterns may also be employed. In addition, the portion where the identifying part 30 is formed is not limited to the canceller-side surface 15a of the inner peripheral-side flange 15, and may also be another portion to be cut. For example, each of the circle regions 31, 32, 33, 34 of the identifying part 30 is set to have one roughness selected from two types of surface roughness, to thereby provide the pattern P with more patterns.

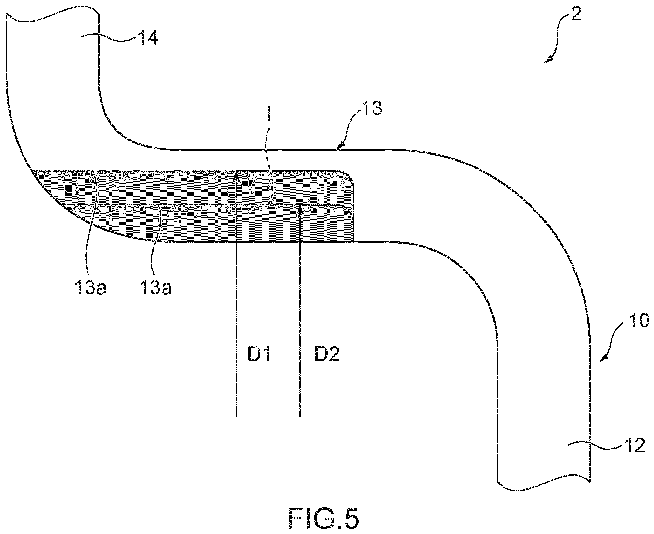

The identifying part 30 having the pattern P thus formed has information for identifying the piston seal 2. For example, the identifying part 30 represents the form of a portion to be cut, which is not the canceller-side surface 15a of the inner peripheral-side flange 15. A canceller seal surface 13a, which is a surface facing the inner peripheral side of the outer peripheral-side cylindrical part 13 of the piston 10 with which the canceller lip 41 of the canceller seal 3 is in contact in the clutch piston mechanism 60, is a stepped surface formed by cutting the inner peripheral surface of a portion of the intermediate I corresponding to the outer peripheral-side cylindrical part 13, as shown in Fig. 5; and the inner diameter of the canceller seal surface 13a is set to various values depending on the shape of the housing 51, and the like. For example, there are two types of pistons 10: one in Specification 1 where an inner diameter of the canceller seal surface 13a is D1, and another in Specification 2 where an inner diameter of the canceller seal surface 13a is D2 (D1 >D2). At this time, for example, the pattern P is provided to the identifying part 30 of the canceller-side surface 15a of the piston 10 in Specification 1, the identification structure 1 is not provided to the piston 10 in Specification 2 and the identifying part 30 is not provided to the canceller seal surface 13a. Accordingly, the piston 10 in Specification 1 and the piston 10 in Specification 2 can be easily distinguished from each other by checking the presence or absence of the pattern P of the identifying part 30 that can be visually recognized. Therefore, in the manufacturing of the automatic transmission 50, even if the piston seal 2 having the piston 10 in Specification 1 and the piston seal 2 having the piston 10 in Specification 2 are mixed, it is possible to easily distinguish the types of the piston seals 2 by visually recognizing the identifying parts 30, to thereby improve the manufacturing efficiency of the automatic transmission 50.

As described above, according to the identification structure 1 of the embodiment of the present invention, it is possible to easily distinguish the types of the piston seals.

For example, in the manufacturing of various clutch piston mechanisms each having various piston seals, by providing each of various pistons with the identification structure 1 having the identifying parts 30 with various patterns, it is possible to provide the identification method for the components of the clutch piston mechanism to facilitate the distinction of the types of the corresponding piston seals. This means that the types of the piston seals can be easily distinguished by checking the patterns provided to the respective pistons. Further, the pistons with the piston seals of certain types may not be provided with the identifying parts 30, and the piston seals can be identified based on the determination of presence or absence of the identifying parts 30. Also in this case, the types of the piston seals can be easily distinguished.

The identifying part 30 may be formed to have any of the plurality of patterns. For example, the identifying part 30 with the pattern P may be provided to the piston 10 in Specification 1 and the identifying part 30 with the pattern P1 different from the pattern P may be provided to the piston 10 in Specification 2. Also in this case, the types of the pistons 10 can be distinguished by visually identifying whether or not the pattern of the identifying part 30 is the pattern P or the pattern P1. Examples of the pattern P1, reverse to the pattern P for example, include a pattern having a greater surface roughness in the regions of the circle regions 31, 33 and a smaller surface roughness in the regions of the circle regions 32, 34. The patterns of the identifying part 30 are not limited to the above-described patterns P, P1, and may be formed in various patterns, and various patterns can be formed by changing the cutting process. Furthermore, the types of the patterns of the identifying part 30 are not limited to the above-described two patterns (the patterns P, P1), and two or more patterns may also be employed. The identifying part 30 may have different types of patterns in accordance with the number of form types of particular portions of the pistons 10.

In addition, the portion provided with the identifying part 30 in each piston 10 is not limited to one portion to be cut in this piston 10, and the identifying part 30 may be provided to two or more different portions to be cut in the piston 10. In this case, the pattern in each portion to be cut in the identifying part 30 may be selected from a plurality of types of patterns, to thereby increase the information carried by the piston. Also, the information may be indicated in combinations of the respective patterns of the identifying parts 30.

Further, the identifying part 30 may be provided to a target portion where the pattern of the identifying part 30 represents information. For example, the identifying part 30 may be provided to the canceller-side surface 15a of the inner peripheral-side flange 15 for the sake of distinguishing the form of the inner peripheral-side flange 15, such as the thickness of the inner peripheral-side flange 15.

In addition, providing the identifying part 30 is not limited to the case of providing the identifying part 30 to the portion to be cut formed by cutting the intermediate I at the same time of this cutting as with the canceller-side surface 15a of the inner peripheral-side flange 15 described above, and the identifying part 30 may be formed by cutting a portion formed in the intermediate I, which is different from the portion to be cut in the intermediate I.

The identifying part 30 is not limited to the case of distinguishing the form of the piston 10 as described above. For example, the identifying part 30 may represent information about the manufacturing process in which the piston seal 2 was manufactured. That is, the identifying part 30 may be provided for traceability of the piston seal 2. Specifically, the identifying part 30 has patterns selected from a plurality of patterns, and the plurality of patterns may correspond to various manufacturing processes of the piston 10, the inner peripheral-side seal lip 20, or the outer peripheral-side seal lip 25. For example, the plurality of patterns selected for the identifying part 30 may correspond to production lots of the pistons 10 and cutting machines used for machining the pistons 10. Thus, by checking the identifying part 30 of the piston seal 2 of interest, it is possible to distinguish the cutting process used for manufacturing this the piston seal 2.

In addition, the identifying part 30 may be used not only for distinguishing the form of the piston 10, but also for distinguishing the types of the forms of the inner peripheral-side seal lip 20 and the outer peripheral-side seal lip 25.

Further, the identification structure 1 according to the embodiment of the present invention can be provided to the canceller seal 3 as a component of the clutch piston mechanism. As described above, the canceller seal 3 includes the cancel plate 40 that is a disk-shaped member made of metal, and the canceller lip 41 as an outer peripheral-side seal lip, which is a member formed of an elastic body provided to the end portion on the outer peripheral side of the cancel plate 40. Specifically, the identification structure 1 is provided to the canceller seal 3 by providing the identifying part 30 to the cancel plate 40. The form of providing the identification structure 1 to the canceller seal 3 will be specifically described below.

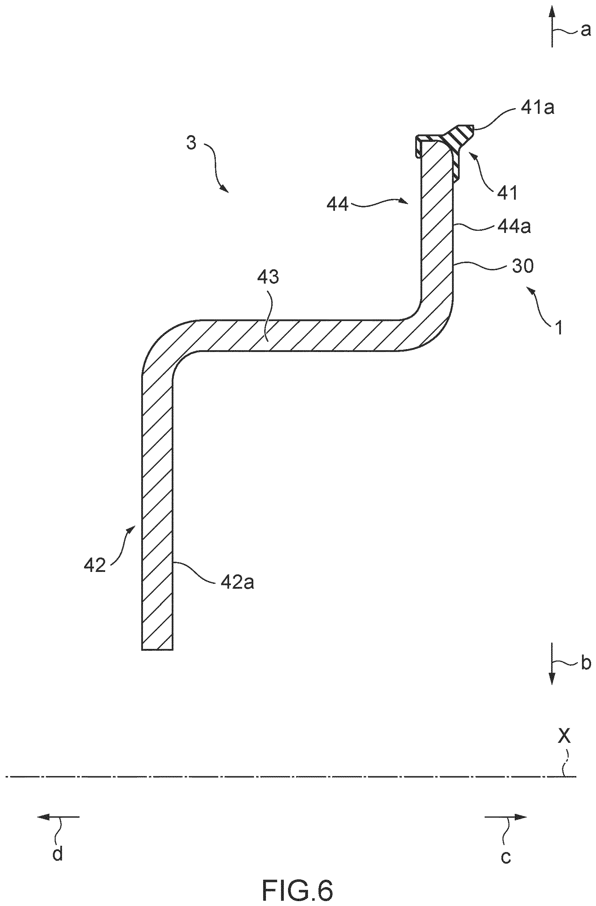

The cancel plate 40 is an annular member around the axis x and has a shape as shown in Fig. 6, for example. Specifically, the cancel plate 40 includes a disk part 42, a cylindrical part 43 and a flange 44. The disk part 42 is a disc-shaped or substantially disc-shaped part arranged around the axis x as a center or substantially thereof. The cylindrical part 43 is a cylindrical or substantially cylindrical part extending from an end portion on the outer peripheral side (arrow a direction side) of the disk part 42 toward a side located on the piston 2 side (arrow c direction side) and arranged around the axis x as a central axis or substantially a central axis thereof. The flange 44 is a disk-shaped part extending from an end portion on the piston 2 side (arrow c direction side) of the cylindrical part 43 toward the outer peripheral side (arrow a direction) and arranged around the axis x as a center or substantially a center thereof.

The canceller lip 41 that is an annular lip extending toward the side located on the canceller hydraulic chamber 65 side and arranged around the axis x is vulcanized and bonded to an end portion on the outer peripheral side of the flange 44 of the cancel plate 40. In the above-described clutch piston mechanism 60, the canceller lip 41 is formed such that a contact end 41a, which is a tip end of the canceller lip 41, slidably contacts the canceller seal surface 13a of the outer peripheral-side cylindrical part 13 of the piston seal 2.

In the above-mentioned clutch piston mechanism 60, the end portion on the inner peripheral side of the disk part 42 of the cancel plate 40 is fixed to the inner peripheral surface 54 of the housing 51 so as not to be moveable relative to each other, via the fixing member such as the snap ring 63. In addition, as described above, in the clutch piston mechanism 60, the flange 44 of the cancel plate 40 is shaped such that the canceller lip 41 slidably contacts the canceller seal surface 13a of the piston seal 2. The canceller lip 41 is formed of an elastic body similar to the elastic bodies that form the inner peripheral-side seal lip 20 and the outer peripheral-side seal lip 25.

As shown in Fig. 1, in the clutch piston mechanism 60, the canceller seal 3 faces the piston seal 2, thereby forming the canceller hydraulic chamber 65 therebetween. The return springs 61 in the canceller hydraulic chamber 65 are in contact with the disk part 42 in the cancel plate 40.

The specific form of the canceller seal 3 has been described above; however, the form of the canceller seal 3 is not limited to the above-described specific form. That is, the shape, material, etc., of the cancel plate 40 are not limited to the above-described specific shape, material, etc., and other shapes, materials, etc. may also be employed. In addition, the form of the canceller lip 41 is not limited to the above-described specific form. That is, the shape, material, etc., of the canceller lip 41 are not limited to the above-described specific shape, material, etc., and other shapes, materials, etc. may also be employed.

The cancel plate 40 includes the identification structure 1 according to the embodiment of the present invention described above. In other words, the cancel plate 40 is formed with the identifying part 30 for identifying the canceller seal 3. The identifying part 30 has a pattern formed by the differences in surface roughness. In this respect, the canceller seal 3 differs from the conventional canceller seal.

The identifying part 30 is formed, for example, in a portion of the cancel plate 40 required to be cut, and the identifying part 30 is formed in a piston-side surface 44a of the flange 44 that is a surface of the flange 44 facing the piston seal 2 side, as shown in Fig. 1 and Fig. 6. The piston-side surface 44a of the flange 44 is a surface formed by cutting an intermediate II finished by subjecting the metal material to press-working, forging, or the like, as described above. The identifying part 30 is formed in this intermediate II at the same time of cutting and forming of the piston-side surface 44a.

The identifying part 30 has a pattern similar to the pattern of the identifying part 30 provided to the piston seal 2, and has the pattern P having concentric circles as shown in Fig. 3, for example. As in the case of the identifying part 30 provided to the piston seal 2, the pattern P of the identifying part 30 is formed by cutting the intermediate II such that the surface roughness varies along the radial direction during cutting and forming the intermediate II with the piston-side surface 44a.

In this manner, the identifying part 30 is formed to a portion to be cut that is a portion of the intermediate II to be cut, to thereby form the identifying part 30 at the same time of cutting the portion to be cut. This configuration can realize an efficient manufacturing of the cancel plate 40 having the identifying part 30. As in the case of the pattern of the identifying part 30 provided to the piston 10, the pattern of the identifying part 30 provided to the cancel plate 40 is not limited to the pattern P shown in the drawing, and may be various patterns. Further, the portion where the identifying part 30 is formed is not limited to the piston-side surface 44a of the flange 44 described above, and may be another portion to be cut.

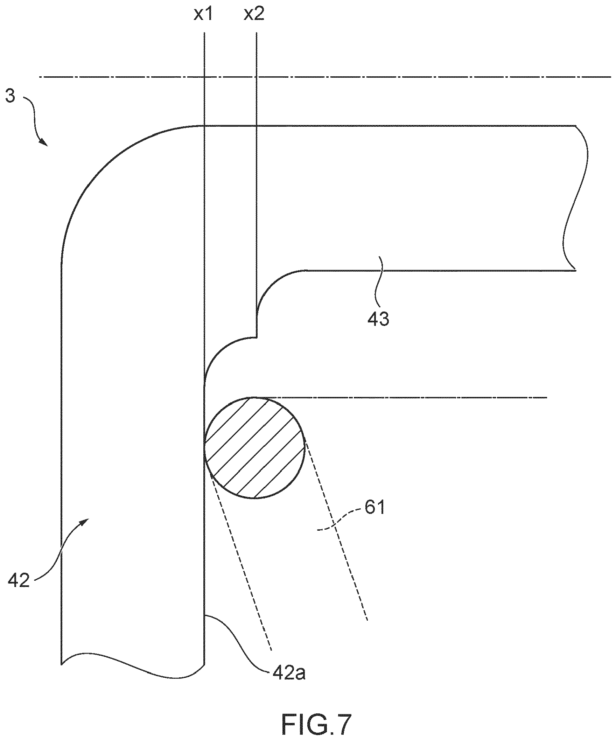

The identifying part 30 having the above pattern P carries information for identifying the canceller seal 3, as in the identifying part 30 formed to the above-described piston 10. For example, the identifying part 30 represents the form of a piston-side surface 42a that is a surface of the disk part 42 facing the piston seal 2 side. Depending on the operating performance required for the automatic transmission 50, the natural length or the compressed length of each return spring 61 of the clutch piston mechanism 60 is set. In this case, the thickness of the disk part 42 of the cancel plate 40 might be changed. For example, the thickness of the disk part 42 of the cancel plate 40 is adjusted by the cutting of the piston-side surface 42a of the disk part 42, and the position in the axis-x direction of the piston-side surface 42a of the cancel plate 40 varies depending on the shape of the return springs 61 or the like. For example, as shown in Fig. 7, there are two types of cancel plates 40: one in Specification 1 where the piston-side surface 42a is located at x1 in the axis-x direction; and another in Specification 2 where the piston-side surface 42a is located at x2 in the axis-x direction. At this time, for example, the identifying part 30 of the flange 44 of the cancel plate 40 in Specification 1 is provided with the pattern P; and the cancel plate 40 in Specification 2 is not provided with the identification structure 1, so that the flange 44 is not provided with the identifying part 30. As a result, the cancel plate 40 in Specification 1 and the cancel plate 40 in Specification 2 can be easily distinguished by checking the presence or absence of the pattern P of the identifying part 30 that can be visually recognized. Therefore, during the manufacturing of the automatic transmission 50, even if the canceller seal 3 with the cancel plate 40 in Specification 1 and the canceller seal 3 with the cancel plate 40 in Specification 2 are mixed, the types of the canceller seals 3 can be easily distinguished by visually checking the identifying parts 30, to thereby enhance the efficiency of the manufacturing of the automatic transmission 50.

The identifying part 30 provided to the canceller seal 3 may be formed in various forms, as in the identifying part 30 provided to the piston seal 2 above described. Specifically, the identifying part 30 provided to the canceller seal 3 may be formed to have any of the plurality of patterns, and is not limited to one portion to be cut, and may be provided to two or more different portions to be cut. In addition, the identifying part 30 provided to the canceller seal 3 may be configured such that combinations of the patterns of the plurality of identifying parts 30 indicate information. The identifying part 30 provided to the canceller seal 3 may be provided to a target portion where the pattern of the identifying part 30 indicates information, or may be formed by machining a portion different from the portion to be cut. The identifying part 30 provided to the canceller seal 3 may indicate information about the manufacturing process in which the canceller seal 3 was manufactured. In addition, the identifying part 30 provided to the canceller seal 3 may be used for distinguishing not only the form of the cancel plate 40 but also the type of the form of the canceller lip 41.

As described above, according to the identification structure 1 of the embodiment of the present invention, it is possible to easily distinguish the type of canceller seal.

For example, in the manufacturing of various clutch piston mechanisms each having various different canceller seals, the identification structure 1 having the identifying part 30 with various patterns is provided to each of various cancel plates, to thereby provide the identifying method for components of the clutch piston mechanism that facilitates the distinction of the type of the canceller seal of interest. That is, the type of the canceller seal of interest can be easily distinguished by checking the pattern provided to this cancel plate. Without providing the identifying parts 30 to the cancel plates of some types of the canceller seals, it is also possible to identify the canceller seals by determining whether or not the identifying parts 30 are present. Also in this case, the types of the canceller seals can be easily distinguished.

The types of the piston seals 2 and the canceller seals 3 may be identified from each other by using combinations of the patterns of the identifying parts 30 provided to the pistons 10 and the patterns of the identifying parts 30 provided to the cancel plates 40, to thereby facilitate setting of the combinations between the piston seals 2 and the canceller seals 3.

Although the embodiments of the present invention have been described above, the present invention is not limited to the embodiments of the present invention, and includes all aspects included in the concept and the scope of claims of the present invention. Moreover, the respective configurations may be selectively combined as appropriate so as to achieve at least part of the above-described problems and effects. For example, the shape, material, arrangement, dimension, manufacturing method, and the like of each component in the above embodiments can be changed as appropriate in accordance with the specific usage aspects of the present invention.

### List of Reference Signs

1 identification structure for components of clutch piston mechanism,
2 bonded piston seal,
3 canceller seal,
10 piston,
11 inner peripheral-side cylindrical part,
12 disk part,
13 outer peripheral-side cylindrical part,
13a canceller seal surface,
14 outer peripheral-side flange,
15 inner peripheral-side flange,
15a canceller-side surface,
20 inner peripheral-side seal lip,
21, 26 contact end,
25 outer peripheral-side seal lip,
30 identifying part,
31, 32, 33, 34 circle region,
40 cancel plate,
41 canceller lip,
41a contact end,
42 disk part,
42a piston-side surface,
43 cylindrical part,
44 flange,
44a piston-side surface,
50 automatic transmission,
51 housing,
52 recessed surface,
53 port,
54 inner peripheral surface,
55 outer peripheral surface,
60 clutch piston mechanism,
61 return spring,
62 multiple disc clutch,
63 snap ring,
64 piston hydraulic chamber,
65 canceller hydraulic chamber,
I, II intermediate,
P pattern

## Claims

1. An identification structure for components of a clutch piston mechanism, **characterized by** comprising:
an identifying part that is provided to a component of the clutch piston mechanism and is used for identifying the component of the clutch piston mechanism,
the identifying part having a pattern formed by differences in surface roughness.

2. The identification structure for components of the clutch piston mechanism according to claim 1, **characterized in that** the identifying part is provided to a portion to be cut of the component of the clutch piston mechanism.

3. The identification structure for components of the clutch piston mechanism according to claim 1, **characterized in that** the identifying part is provided to a portion different from a portion to be cut of the component of the clutch piston mechanism.

4. The identification structure for components of the clutch piston mechanism according to claim 1 or 2, **characterized in that** the identifying part represents a difference in form between a particular portion of the component of the clutch piston mechanism and a particular portion of a component of another clutch piston mechanism.

5. The identification structure for components of the clutch piston mechanism according to claim 1 or 2, **characterized in that** the identifying part represents information about a manufacturing process in which the component of the clutch piston mechanism was manufactured.

6. The identification structure for components of the clutch piston mechanism according to any one of claims 1 to 5, **characterized in that**
the component of the clutch piston mechanism is a bonded piston seal,
the bonded piston seal includes: a piston that is a disk-shaped member made of metal; an inner peripheral-side seal lip that is a member formed of an elastic body provided to an end portion on an inner peripheral side of the piston; and an outer peripheral-side seal lip that is a member formed of an elastic body provided to an end portion on an outer peripheral side of the piston, and
the identifying part is provided to the piston.

7. The identification structure for components of the clutch piston mechanism according to any one of claims 1 to 5, **characterized in that**
the component of the clutch piston mechanism is a canceller seal,
the canceller seal includes: a cancel plate that is a disk-shaped member made of metal; and an outer peripheral-side seal lip that is a member formed of an elastic body provided to an end portion on an outer peripheral side of the cancel plate, and
the identifying part is provided to the cancel plate.

8. An identification method for components of a clutch piston mechanism, **characterized by** comprising identifying a component of the clutch piston mechanism having the identification structure based on the identification structure for components of the clutch piston mechanism according to any one of claims 1 to 7.

9. The identification method for components of the clutch piston mechanism according to claim 8, **characterized by** comprising a step of identifying information about the component of the clutch piston mechanism having the identification structure based on the identifying part.

10. The identification method for components of the clutch piston mechanism according to claim 8, **characterized in that** the component of the clutch piston mechanism having the identification structure is distinguished from a component of a clutch piston mechanism having no identification structure.
